# EUROPEAN PATENT SPECIFICATION

(11) **EP 2 149 480 B1**
(45) Date of publication and mention of the grant of the patent: **15.06.2011**
(21) Application number: 09166241.1
(22) Date of filing: 23.07.2009
(51) Int. Cl.: B60R 21/213, B60R 21/231

(54) **Improvements in curtain airbags**
Verbesserungen bei Seitenairbags
Améliorations portant sur des coussins d'air de type rideau

(30) Priority: 30.07.2008 GB 0813894
(43) Date of publication of application: 03.02.2010
(73) Proprietor: Nissan Motor Manufacturing (UK) Ltd., Cranfield Bedfordshire MK43 0DB (GB)
(72) Inventor: Balderson, Neil, Cranfield Bedfordshire MK43 0DB (GB)

(56) References cited:
- EP-A- 1 338 482
- US-A1- 2002 074 778
- US-A1- 2003 178 832
- US-A1- 2003 222 435
- US-A1- 2006 125 214
- US-A1- 2006 138 750

## Description

### Field of the invention.

The invention relates to curtain airbags and, more specifically, to flexible deployment aids used for curtain airbag assemblies. The invention also relates to the method of assembling said curtain airbag assemblies to motor vehicles.

### Background of the invention.

Curtain airbags are well known in the art. Curtain airbags are typically mounted inside the vehicle, adjacent to the roof and are typically provided in pairs, so as to provide coverage along both the left and right side of the vehicle. They are intended to provide an energy absorbing layer between the side windows of a vehicle and its occupants in the event of a side impact or rollover accident. The purpose of the curtain airbag is to restrain the occupants in the event of high lateral acceleration and to provide an energy absorbing layer to manage the forces sustained by the vehicle occupants. To that end, curtain airbags and airbags in general are also known as inflatable restraints.

US 2003/178,832 discloses a curta>in airbag assembly comprising strap-like tether retainers anchored on the vehicle body and looped around the folded airbag onto themselves. US 2006/138,750 discloses a supplementary curtain airbag cover which is attached to inner and outer curtain airbag covers. EP 1,338,482 discloses a prior art airbag cover with sheet tethers which are functionally very similar to the tether retainers of US 2003/178,832, and are mounted to the vehicle and airbag assembly in like fashion.

The curtain airbag typically covers the majority of the glass area along the side of the vehicle so as to offer protection to both the head and thorax of the occupants on the affected side of the vehicle. The timing, trajectory and deployment kinematics of the deploying airbag are all critical. If the curtain airbag is obstructed during deployment it can result in uncontrolled deployment behaviour and even incomplete deployment. If the curtain airbag does not deploy fully in the time required there is a risk that the restraint performance of the curtain airbag will be compromised. To minimise the risk of the curtain airbag being obstructed during deployment it is common practice to use deployment aids.

The use of deployment aids in curtain airbag assemblies are well known in the art. These deployment aids typically fall into two main categories, namely rigid deployment aids, such as ramps and reaction surfaces, and flexible or fabric deployment aids such as wraps, also known as sleeves or socks.

Rigid deployment aids such as ramps often take the form of a tapered metal or plastic bracket. This bracket is either mounted to the vehicle body or to the curtain airbag assembly itself. The ramp typically has at least one relatively smooth surface positioned in such a way as to guide the deploying airbag around an obstacle, to ensure correct deployment kinematics for the airbag and to prevent a phenomenon known as 'hanging' or `hanging-up'.

Hanging occurs when a deploying airbag encounters an obstacle which momentarily slows the airbag deployment locally, causing the airbag gas to be redirected around the obstacle and thus cause the airbag to fill unevenly or in the wrong sequence. In the worst case, a hung airbag will not clear the obstacle and will not fully cover the window or vehicle body structure as it was intended.

Alternatively, a wrap or sock may be used as a deployment aid. In some situations, a flexible deployment aid such as a wrap or sock may be employed to move an obstacle out of the deployment path of an airbag. A wrap is a sacrificial piece of fabric that is wrapped around the folded curtain airbag when the airbag is in the stowed position. Such wraps are often used to force adjacent trim parts, such as the headlining, off its mountings to allow the airbag that is otherwise concealed behind the headlining, to deploy downwards along the glass-line of the vehicle.

Wraps are supplied to the vehicle assembly line as part of the curtain airbag assembly. They are then installed in the vehicle when the curtain airbag is fitted in place. The wrap may cover a part or the entire length of the folded curtain airbag. The wrap may be used as a deployment aid or alternatively, to protect the folded airbag from damage during transit or abrasion caused by contact with other vehicle components when installed. To prevent excessive variation in deployment characteristics or trapping of the wrap by the adjacent vehicle components, the wrap is wrapped tightly around the curtain airbag. Wrapping the curtain airbag tightly with the wrap also serves to keep the tightly folded curtain airbag correctly folded during the lifetime of the vehicle.

Ramps and wraps are not without their limitations. Rigid ramps are relatively costly and their size, shape and positioning must be tuned to a specific vehicle application. This greatly reduces the opportunity to share common parts between vehicle platforms. When comparing two different vehicle platforms, the size and position of a specific obstacle is rarely in the same position relative to the curtain airbag for both platforms. This either leads to one vehicle installation being optimised over another or the curtain airbag must be supplied with two different, vehicle specific ramps. Wraps used to guide airbag deployment need to be positioned adjacent to an obstacle and so are vehicle specific.

One known problem with curtain airbags can occur when the folded curtain airbag becomes twisted prior to, or during, assembly to the vehicle. This is particularly problematic with long vehicles which have correspondingly long curtain airbags. A folded curtain may be over 3m long, so a 360° twist along the length of a folded curtain airbag will not reduce the overall length sufficiently to prevent the assembly operator from installing the airbag onto the mounting points of the vehicle. A twisted curtain airbag has little chance of correct deployment as the twist tends to restrict the flow of gas along the length of the airbag and tends to prevent the curtain airbag from fully covering the glass area as intended. A curtain airbag supplied to the vehicle assembly line with a wrap may obscure all or part of the folded airbag and may prevent the assembly operator from detecting a twisted airbag. To manage this risk, manufacturers have numerous countermeasures in place, all of which are either time consuming or expensive, and result in more effort being required of the assembly operators than may otherwise be necessary.

It is against this background that the present invention seeks to provide a flexible deployment aid for a curtain airbag which does not obscure the folded curtain airbag from the assembly operator during assembly to the vehicle. The flexible deployment aid of the present invention also permits a vehicle manufacturer to benefit from using common parts, such as curtain airbags, across different vehicle platforms without compromising performance. This approach greatly improves the quality and efficiency of the vehicle assembly process.

### Summay of the invention.

According to an aspect of the present invention there is provided a deployment aid for a vehicle-mounted airbag assembly, the flexible deployment aid comprising a sheet of flexible material and first and second retaining means, wherein the first retaining means is configured to secure said sheet to a part of the vehicle between the vehicle body and the airbag and wherein the second retaining means is configured to releasably attach said sheet to the vehicle and to release said sheet during deployment of the airbag. The present invention provides the advantage that the airbag is mounted to the vehicle after the deployment aid has been secured to the vehicle body via the first retainers. In this way, the position of the deployment aid is unique to a vehicle rather than fixed to a location along a common airbag. Adjusting the position of a vehicle specific deployment ramp relative to the vehicle and airbag is far less complex and costly than designing and supplying vehicle specific airbags with vehicle specific deployment aids.

This allows for greater commonality of parts used between similar vehicle platforms as the airbag assembly may be shared between multiple vehicles with vehicle specific features being provided by the body-mounted deployment aid. The body-mounted deployment aid is a simple and cost effective device that may be readily tuned to meet the specific needs of vehicle. The present invention provides a further advantage to the vehicle manufacturer that the deployment aid may be supplied separately from the airbag and positioned where it is most advantageous for any given vehicle. Previously, a wrap has always been a part of the airbag assembly. If the airbag is to be used on multiple vehicle platforms, either the wrap is limited to performing the function of protecting the airbag in transit, or each vehicle platform must be supplied with a specific airbag and wrap configuration. The present invention solves these problems with a simple, lightweight and economical design.

According to an embodiment, the deployment aid comprises visual identification means to indicate to an assembly operator the identity of the vehicle and/or position for which the deployment aid is intended.

According to an embodiment, the visual identification means is provided by colour-coded retainers.

According to an embodiment, the visual identification means is provided by means of any of the following: the shape, colour, printing on or stitching through the sheet.

Providing the body-mounted deployment aid with visual identifiers greatly reduces the likelihood of an assembly operator inadvertently fitting the wrong part to a vehicle during assembly. This benefit is provided without increasing the cost or parts complexity of the airbag assembly, which is an otherwise relatively expensive and complicated component. This also has the advantage of producing a design that may be sub-assembled at the side of the vehicle assembly line if so desired.

According to an embodiment of the present invention there is provided a deployment aid shaped so as to suit one vehicle and/or position when fitted to the vehicle in a first orientation and at least one other vehicle and/or position when fitted in another orientation.

According to an embodiment, visual identification means is provided to indicate to an assembly operator the identity of the vehicle and/or position for which the deployment is intended when fitted to the vehicle in a given orientation.

According to an embodiment, the deployment ramp is provided with a deployment aid according to any of the preceding Claims.

According to another aspect the present invention there is provided a curtain airbag ramp system comprising a deployment aid as set out in one or more of the preceding paragraphs, wherein the deployment aid is connected to the vehicle body via the curtain airbag ramp.

According to a further aspect of the present invention there is provided a vehicle comprising a body mounted flexible deployment aid for a curtain airbag assembly according to one or more of the preceding paragraphs.

According to a still further aspect of the present invention there is provided a method of assembling a deployment aid for a vehicle-mounted airbag to the vehicle, the method comprising attaching a sheet of flexible material to a vehicle body adjacent to the vehicle roof via a first retainer, attaching the airbag assembly to the vehicle, wrapping the sheet of flexible material around at least part of the airbag and securing the sheet of flexible material around the airbag to the vehicle via a second retainer.

Only after the airbag has been correctly mounted to the vehicle is the deployment aid wrapped around the curtain airbag and secured to the vehicle via the releasable second retainer. This allows the assembly operator to examine the airbag prior to assembling it to the vehicle, allowing him or her to check for twists and potentially correct them before securing the airbag to the vehicle.

It will be appreciated by one skilled in the art that the deployment aid of the present invention may be suitable for use in other vehicle-based applications.

It will be appreciated by one skilled in the art that the preferred and/or optional features relating to the present invention may be used either alone or in appropriate combination.

### Brief Description of the Drawings

In order that the invention may be more readily understood reference is made, by way of example only, to the accompanying drawings in which:
Figure 1a is an interior side view of a known curtain airbag assembly installed in a first vehicle, Figure 1b shows the same curtain airbag installed into a second vehicle whose body length is longer than that of the first;
Figures 2a and 2b show examples of known roof mounted curtain airbag deployment ramps or guides as may be employed in a vehicle such as that shown in Figure 1;
Figure 3a is a plan view of the flexible deployment aid of the present invention and Figure 3b shows the flexible deployment aid in the folded condition;
Figures 4a through 4d are sectional views of the present invention and a known curtain airbag, in the order in which they are installed into a vehicle;
Figure 5 shows a more detailed exploded perspective view of a known curtain airbag being assembled to a vehicle using the flexible deployment aid of the present invention; and
Figure 6 shows the flexible deployment aid of the present invention assembled around a curtain airbag before the adjacent trim pieces, such as the headlining and pillar trim, are fitted to the vehicle.

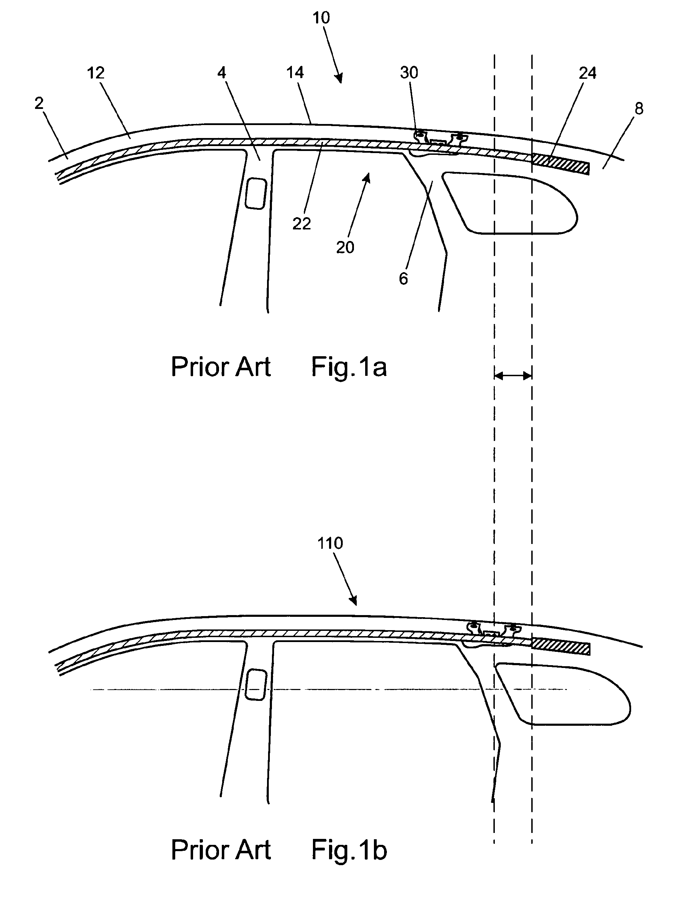

Figures 1 a and 1b show an interior side view of two vehicles of different lengths. The roof 14, cant rail 12 and roof pillars, 2, 4, 6, 8 are all shown and provide a convenient reference for the position of the known curtain airbag assembly 20.

Referring to Figure 1a, the known curtain airbag assembly 20 is installed in a first vehicle 10 adjacent to the vehicle roof 14. In this example, the vehicle 10 with a standard body length is fitted with a known curtain airbag assembly 20 of a set length. The vehicle 10 comprises four roof pillars on each side to support the roof frame which forms a perimeter around the vehicle roof 14 itself. The pillars are known as the 'A' pillar 2, 'B' pillar 4, 'C' pillar 6 and 'D' pillar 8, with the 'A' pillar 2 being adjacent to the front of the vehicle 10 and the windscreen (not shown). The 'B' pillar 4 is positioned between the two side door apertures and the 'C' pillar 6 is positioned behind the rearmost side door. The 'D' pillar 8 is adjacent to the rear of the vehicle, also not shown. The four pillars on each side of the vehicle 10 support a roof frame which generally has two substantially parallel cant rails 12. The cant rails 12 connect the top of each roof pillar together and provide a suitable mounting location for the curtain airbag assembly 20. The cant rails 12 are substantially box sections orientated in a generally horizontal orientation, parallel to the longitudinal axis of the vehicle. The vehicle roof 14 is supported by the cant rails 12 along each side of the roof and by a header-rail at the top of the windscreen and a rear cross-member above the rear screen. The header-rail, windscreen, rear cross-member and rear screen have all been omitted from Figures 1 a and 1 b for clarity.

The known curtain airbag assembly 20 comprises a folded airbag 22 and a curtain airbag inflator 24, this are clearly visible in figure 1 a. Shown at the top of the 'C' pillar 6 is a roof-mounted ramp 30. The ramp 30 is of a known design and is intended to guide the curtain airbag during deployment over adjacent obstacles positioned below the curtain airbag such as a 'C' pillar trim or a seatbelt shoulder loop.

Figure 1b shows the same curtain airbag assembly 20 as shown in Figure 1 a installed into a second vehicle 110 whose body length is longer than that of the first vehicle 10. It may be seen that in some instances, a curtain airbag may be common between two different vehicles, whose size and shape may differ within certain operating parameters. In the examples shown in Figures 1 a and 1b, it is assumed that the coverage of the deployed curtain airbag will cover a sufficient proportion of the vehicle side to offer suitable restraint performance for either vehicle.

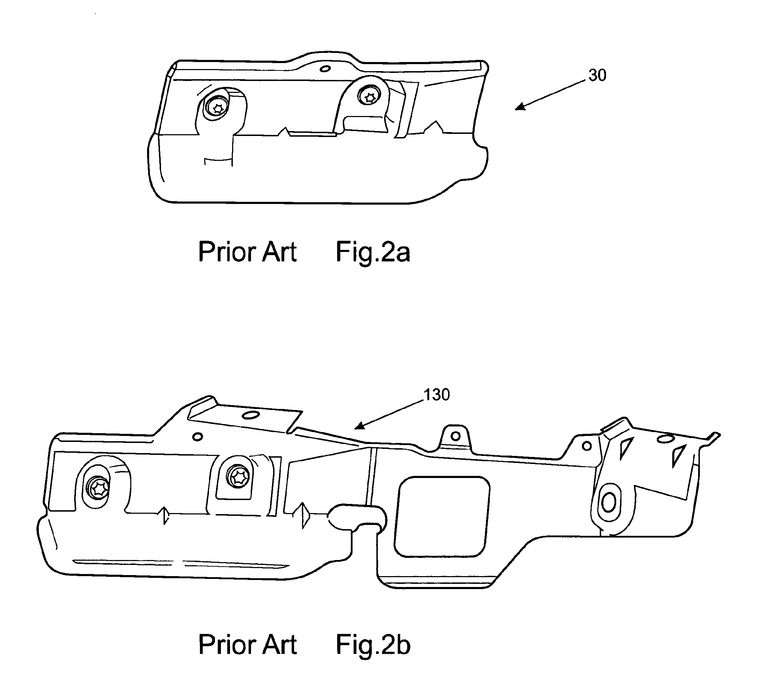

Figure 2 shows detailed views of two typical roof-mounted deployment ramps. Figure 2a shows a roof-mounted deployment ramp 30 which is mounted to the cant rail 12 via retaining bolts 34a and 34b. The deployment ramp 30 is fitted to the cant rail 12 before the curtain airbag assembly 20 is mounted to the vehicle. In this way the ramp can guide an airbag deploying above the ramp over an obstruction below the ramp. Figure 2b shows another example of a roof-mounted deployment ramp. In the example shown in figure 2b, the roof-mounted deployment ramp has an integrated support bracket 130 for a sunroof module (not shown).

It will be appreciated by one skilled in the art that such ramps may be employed in a variety of locations around the vehicle to help guide the deployment kinematics of a deploying airbag to optimise the restraint characteristics of the inflatable restraint.

Sharing common parts between two or more vehicle models is highly desirable to increase purchasing volumes to reduce the piece part cost. Sharing common parts between vehicles also serves to reduce the likelihood of accidental assembly of the wrong part to the vehicle as it reduces the variation of parts on the side of the vehicle assembly line.

When comparing the two vehicles of Figure 1 a and 1b it may be seen that the shape of the two vehicle bodies are similar, however the key elements of the vehicle, namely the roof pillars, are in a slightly different position relative to the curtain airbag 20 and inflator 24. In some instances this may give rise to different deployment characteristics and in the worst case may cause the curtain airbag to hang-up on interior features of the second vehicle 110 that did not obstruct the airbag deployment in the first vehicle 10. In this situation the vehicle and airbag manufacturers must either redesign features of the vehicle, airbag or both. This can be technically challenging and extremely costly in terms of both time and resources.

The curtain airbag assembly 20 is deployed using gas produced by the inflator 24 to inflate the folded airbag 22. The gas is directed into the curtain airbag 22 via a tube, the pressure of the gas is sufficient to cause the airbag to expand. Once inflated from its folded state, the curtain airbag is typically intended to cover the upper portions of the roof pillars and the windows of the side doors. The kinematics of airbag deployment must be repeatable in order to provide reliable restraint performance with reproducible deployment characteristics.

Obstruction of the deploying curtain airbag is generally undesirable and is typically managed using countermeasures such as ramps and reaction surfaces. Obstruction of the airbag can affect the deployment characteristics more when the obstruction occurs in a particularly critical location along the length of the airbag, or at a particularly critical time during the deployment than at other locations or times. In the example shown in Figure 1b, fitting the curtain airbag to the longer vehicle 110 has resulted in the first portion of the airbag 22 adjacent to the inflator 24 to be too close to the 'C' pillar trim. In this example, the position of the 'C' pillar trim relative to the first portion of the airbag is obstructing the deploying airbag, causing unwanted variable deployment characteristics. The generally accepted remedy for this situation is to extend the length of the airbag, to distance the inflator from the 'C' pillar trim, or to completely redesign the rear side window and associated trim. Both countermeasures will result in an undesirable loss of commonality of parts between the vehicles shown in Figure 1a and 1b and an increase in cost and parts complexity.

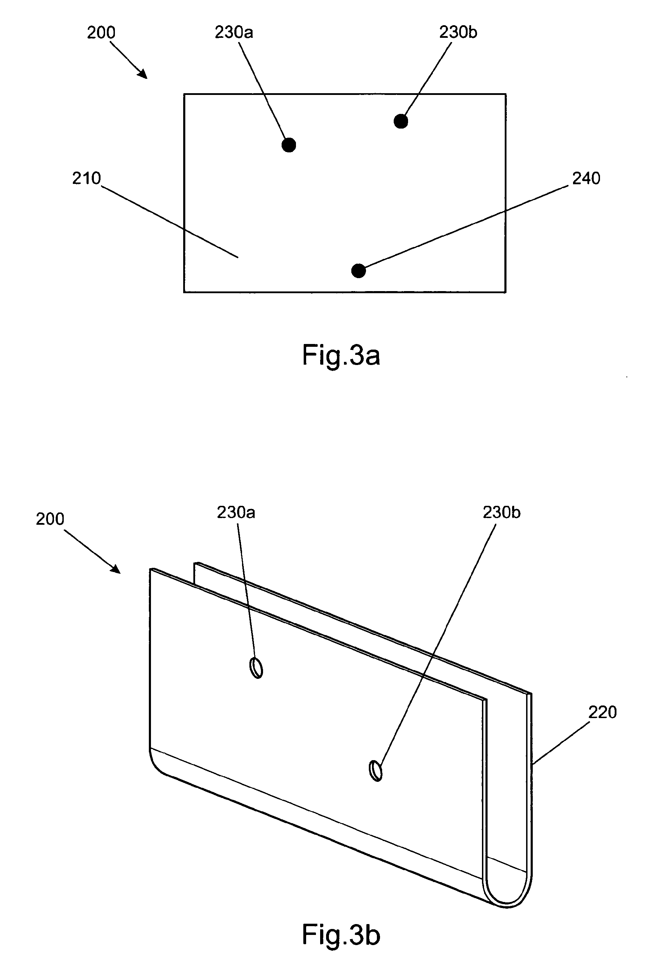

Figure 3 shows two views of the present invention, a body-mounted flexible deployment aid 200. Figure 3a shows a plan view of the flexible deployment aid 200 which is formed from a sheet 210 of resilient fabric such as that used to form the airbag itself, typically a woven polyester or nylon textile. The size and shape of the flexible deployment aid 200 is dictated by the size and position of the curtain airbag assembly relative to the vehicle roof frame and associated potential obstacles such as the headlining and the pillar trims.

Figure 3a shows the location of three holes in the sheet 210, there are two holes to provide a first fixation, 230a and 230b are the upper and lower first fixation-holes respectively. The first fixation-holes are positioned to align with the fixation bolts 34a and 34b of the roof-mounted deployment ramp 30. In one example (not shown), the flexible deployment aid 200 is supplied to the vehicle assembly line as a pre-assembled unit to the roof-mounted deployment ramp. In this way, the deployment ramp and flexible deployment ramp are supplied together as a sub-assembly. In this case, the sheet 210 is held to the ramp via the ramp mounting bolts which pass through the upper and lower first fixation-holes 230a and 230b and through the corresponding holes in the ramp. The mounting bolts are held captive to the roof mounted deployment ramp 30 by fibre or star washers.

Also shown in Figure 3a is a hole for a second fixation 240. The second fixation-hole 240 is used to hold the flexible deployment aid 200 around the folded curtain airbag 220 once it has been mounted to the vehicle.

Figure 3b shows a representation of the flexible deployment aid 200 with the sheet in the folded or wrapped condition 220. The two fixation-holes 230a and 230b are clearly visible on the side of the folded sheet 220 that is to be fitted against the roof-mounted deployment ramp 30. The side of the folded sheet 220 with the second fixation-hole 240 is wrapped around the folded curtain airbag 22 and typically lies between the curtain airbag and the vehicle headlining.

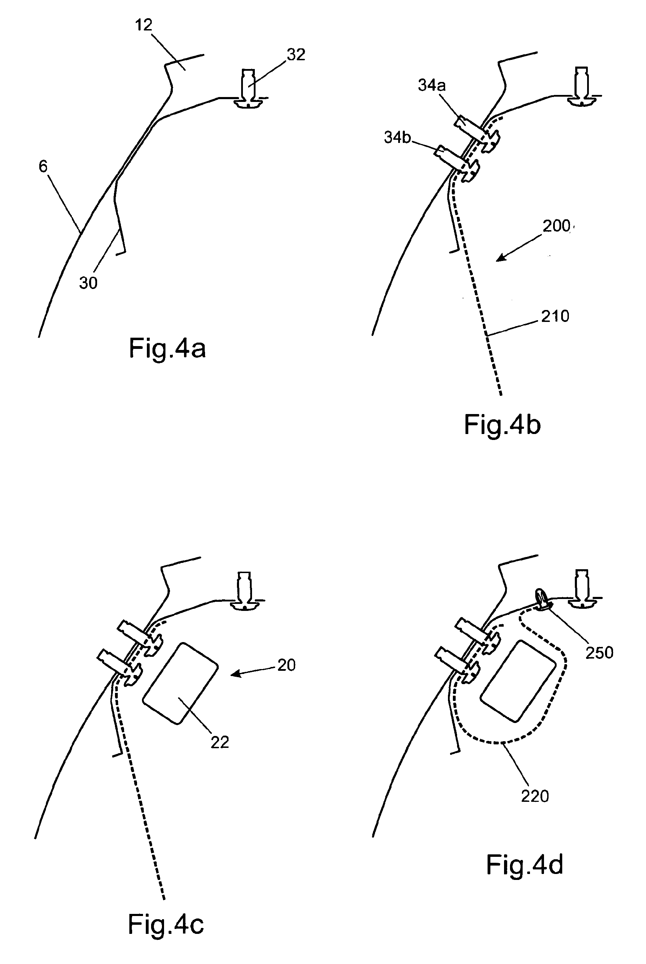

Figures 4a through 4d shows an alternative assembly procedure in four steps for fitting deployment ramp 30, curtain airbag assembly 20 and flexible deployment aid 200 to the vehicle roof frame or cant rail 12. In this example, the sheet 210 is assembled to the deployment ramp 30 in the vehicle rather than being delivered pre-assembled as previously described.

Figure 4 shows a section through the 'C' pillar 6 of the vehicles shown in Figure 1 a and 1b. Shown at the top of the 'C' pillar 6 is the cant rail 12 forming part of the roof frame. The cant rail 12 provides a suitable mounting location for the deployment ramp 30 and curtain airbag assembly 20.

The first step in this process is shown in Figure 4a. The deployment ramp 30 is held in position by the assembly operator and a location bolt 32 is used to secure the top of the deployment ramp 30 to the cant rail 12.

The second step in the assembly process is shown in figure 4b. The assembly operator places the sheet 210 of the flexible deployment aid 200 against the deployment ramp 30 and inserts the final two fixation bolts for the ramp 30 shown as first fixation bolts 34a and 34b. The fixation bolts 34a and 34b pass through the holes 230a and 230b in the sheet 210 and through the ramp 30 and are secured into threaded receivers such as weld-nuts (not shown) in the cant rail 12. In this way the first fixation bolts 34a and 34b provide the first fixations for the flexible deployment aid 200. The sheet 210 then hangs down from the first fixation bolts 34a and 34b and lies against the deployment ramp 30.

The third step in the assembly process is shown in figure 4c. The assembly operator lifts the curtain airbag assembly 20 into position against the cant rail 12 and the ramp 30. As discussed previously there may be multiple ramps employed along each side of the vehicle to guide the deployment characteristics of a curtain airbag. The number and position of the ramps is dictated by the design of the vehicle and curtain airbag. Once the curtain airbag 20 is correctly positioned it is secured against the roof frame with multiple fasteners in the form of threaded fasteners and/or hooks or clips.

The fourth step in the assembly process is shown in figure 4d. Once the curtain airbag assembly 20 is correctly installed within the vehicle the assembly operator folds or wraps the sheet 210 over the folded airbag 22. The folded or wrapped sheet of the flexible deployment aid 200 is shown generally at 220. The folded sheet 220 is held in place with another fastener. In the example shown the sheet 220 is held in place using a releasable fastener in the form of an expanding friction clip 250.

With these four assembly steps completed the assembly operator may then fit the headlining and associated pillar trim parts to the vehicle. These associated parts cover the airbag assembly, ramp and the flexible deployment aid when fitted, obscuring them all from the view of the vehicle occupants.

During deployment, the curtain airbag expands applying pressure to the flexible deployment aid 200. The folded sheet 220 pulls against the releasable expanding friction clip 250 which will either release from the vehicle body or pull through the second fixation-hole 240 in the sheet 220. The flexible deployment aid 200 works by folding open over the top of a potential obstacle for the deploying curtain airbag and providing a smooth surface for the curtain airbag to deploy over.

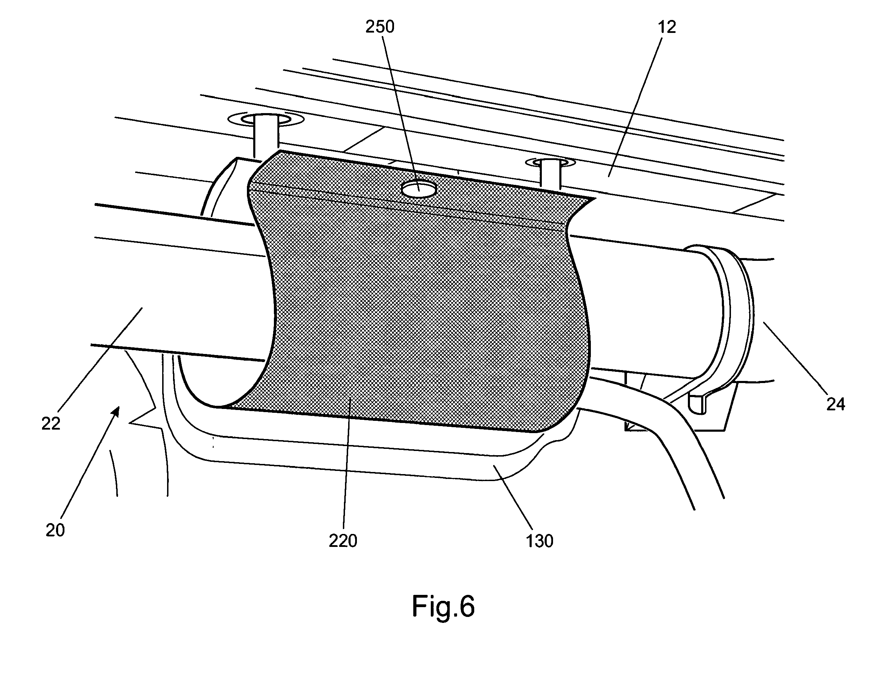

It will be appreciated by one skilled in the art, that the flexible deployment aid 200 of the present invention, lends itself to be used alone or in conjunction with other known airbag deployment guides such as ramps and reaction surfaces. Similarly the flexible deployment aid 200 of the present invention may also be used individually or in combination with other flexible deployment aids to guide a deploying airbag between obstacles. If used in pairs or multiples around a curtain airbag assembly 20 care must be taken to minimise friction between the curtain airbag 20 and the flexible deployment aid 200. Figures 4d and 6 show the flexible deployment aid 200 wrapped relatively loosely around the curtain airbag assembly 200 so as not to present a potential obstacle to the deploying airbag itself. The airbag must be given an opportunity to start to inflate and expand before applying any significant load to the folded sheet 220 otherwise the flexible deployment aid 200 will tend to adversely affect the deployment characteristics of the curtain airbag.

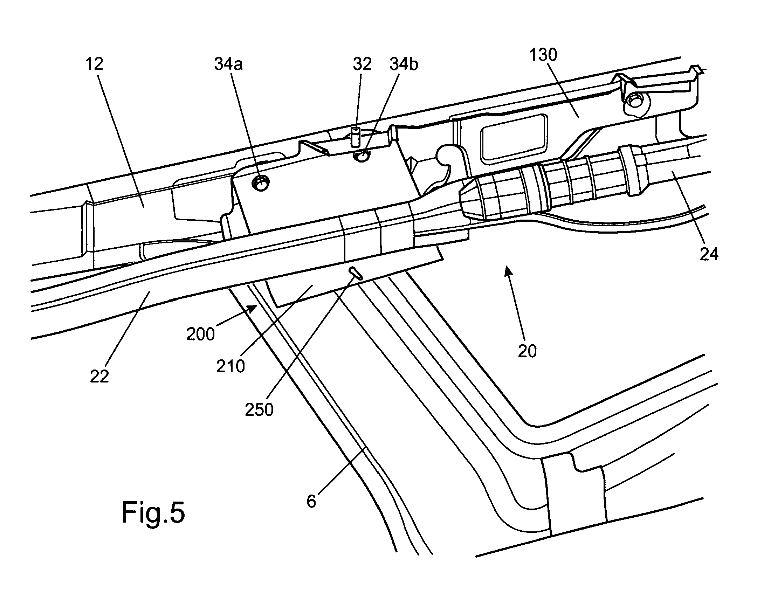

Figure 5 shows the third assembly process as shown in Figure 4c in greater detail. It may be seen from Figure 5 that the expanding friction clip 250 is supplied pre-assembled to the flexible deployment aid 200 by being inserted through the second fixation-hole 240 of the sheet 210. The pre-assembly of the relevant fasteners to the flexible deployment aid 200 greatly reduces assembly time and the effort required by the assembly operator to perform the operation.

In the example shown in Figure 5, the deployment ramp is combined with a feature to support a vehicle sunroof module. This combined ramp and support is labelled 130 as shown in figure 2b. The perspective view of the curtain airbag assembly 20 with the inflator 24 and folded airbag 22 clearly shows that the curtain airbag is in the process of being aligned with the mounting holes in the cant rail 12 above the 'C' pillar 6. As previously described, this is the penultimate step of the assembly procedure, before the assembly operator folds the flexible deployment aid 200 around the curtain airbag 20 and secures it in place with the expanding friction clip 250 which is shown in more detail in Figure 6.

Figure 6 shows the curtain airbag assembly 20, ramp 130, flexible deployment aid 200 and inflator 24 fitted to the cant rail 12 beneath the vehicle roof 14. The folded sheet 220 of the flexible deployment aid 200 is held in place around the folded curtain airbag 22 by means of the expanding friction clip 250.

It will be appreciated by one skilled in the art, that a wrap secured to the vehicle body either directly, or via an appropriately positioned ramp, allows the complete assembly to have more space between the curtain airbag and the wrap. The wrap may be folded around the curtain airbag far more loosely and this leads to more reliable performance and less chance of the wrap itself presenting the deploying curtain airbag with an obstacle. This loose wrapping is possible because the design of the flexible deployment aid is optimised for guiding the airbag and not for protecting the airbag or keeping it folded during transit. As the flexible deployment aid is the last component in the restraint system to be fitted to the cant rail, there is less likelihood of other components being placed over the folded sheet and trapping it. The unwanted trapping of the flexible deployment aid sheet may lead to the sheet becoming an obstacle to the deploying airbag.

Another advantage of the present invention is that the sheet 210 of the flexible deployment aid 200 is formed from a flat sheet of material. This allows the sheet to be used on either the left or right side of the vehicle regardless of the shape of the sheet as it may be flipped over so as to orientate correctly with the vehicle body.

Providing a solution that allow leads to an assembly process where the last step is to secure the expanding friction clip in place allows the assembly operator to make a final check that the components of the restraint system are all present and fitted correctly before obscuring them from view. This offers a significant benefit in both vehicle build quality and component reliability.

Other advantage will be apparent to one skilled in the art and the present examples and embodiments are to be considered a illustrative and not restrictive. The invention is not to be limited to the details given herein, but may be modified within the scope and equivalence of the appended claims.

## Claims

1. A deployment aid (200) for a vehicle-mounted airbag assembly (20), the deployment aid (200) comprising:
a sheet of flexible material (210); and
first (34a, 34b) and second (250) retaining means;
**characterized in that**:
the first (34a, 34b) retaining means is configured to secure said sheet (210) to a part of the vehicle (10, 110) between the vehicle body (6, 12) and the airbag (20); and
**in that** the second (250) retaining means is configured to releasably attach said sheet (210) to the vehicle (10, 110) and to release said sheet (210) during deployment of the airbag (20).

2. A deployment aid (200) according to Claim 1 wherein the deployment aid (200) further comprises visual identification means to indicate to an assembly operator the identity of the vehicle (10, 110) and/or position for which the flexible deployment is intended.

3. A deployment aid (200) according to Claim 1 or Claim 2 wherein the deployment aid (200) is shaped so as to suit one vehicle (10, 110) and/or position when fitted to the vehicle in a first orientation and at least one other vehicle (10, 110) and/or position when fitted in another orientation.

4. A deployment aid (200) according to Claim 3 wherein visual identification means is provided on the deployment aid (200) to indicate to an assembly operator the identity of the vehicle (10, 110) and/or position for which the deployment is intended when fitted to the vehicle (10, 110) in a given orientation.

5. A deployment ramp (30, 130) for a curtain airbag (20) wherein the deployment ramp (30, 130) is provided with a deployment aid (200) according to any of the preceding Claims.

6. A curtain airbag ramp system comprising a deployment aid (200) according to any of the preceding Claims, wherein the deployment aid (200) is connected to the vehicle body (6, 12) via the curtain airbag ramp (30, 130).

7. A vehicle (10, 110) comprising a deployment aid (200) according to any of the preceding Claims.

8. A method of assembling a deployment aid (200) for a vehicle-mounted curtain airbag (20) to the vehicle (10, 110), **characterized in that** the method comprises:
attaching a sheet (210) of flexible material to a vehicle body (6, 12) adjacent to the vehicle roof (14) via a first retainer(34a, 34b);
attaching the curtain airbag assembly (20) to the vehicle body (6, 12) adjacent to the vehicle roof (14);
wrapping the sheet (210) of flexible material around at least part of the curtain airbag (22) and;
securing the sheet (210) of flexible material around the curtain airbag (22) to the vehicle body (6, 12) via a second retainer (250).

## Patentansprüche

1. Auslösehilfe (200) für eine in einem Fahrzeug eingebaute Airbag-Baugruppe (20), wobei die Auslösehilfe (200) Folgendes umfasst:
einen Bogen aus biegsamem Material (210); und
ein erstes (34a, 34b) und ein zweites (250) Haltemittel;
**dadurch gekennzeichnet, dass**:
das erste (34a, 34b) Haltemittel dazu ausgebildet ist, den genannten Bogen (210) an einem Teil des Fahrzeugs (10, 110) zwischen der Fahrzeugkarosserie (6, 12) und dem Airbag (20) zu befestigen; und
dass das zweite (250) Haltemittel dazu ausgebildet ist, den genannten Bogen (210) lösbar am Fahrzeug (10, 110) anzubringen und den genannten Bogen (210) während des Auslösens des Airbags (20) freizugeben.

2. Auslösehilfe (200) nach Anspruch 1, wobei die Auslösehilfe (200) weiter ein optisches Identifikationsmittel umfasst, um einem Montagearbeiter die Identität des Fahrzeugs (10, 110) und/oder die Positon für die die biegsame Auslösung bestimmt ist, anzuzeigen.

3. Auslösehilfe (200) nach Anspruch 1 oder Anspruch 2, wobei die Auslösehilfe (200) so geformt ist, dass sie zu einem Fahrzeug (10, 110) und/einer Position passt, wenn sie in einer ersten Orientrierung am Fahrzeug montiert ist und zu mindestens einem anderen Fahrzeug (10, 110) und/oder einer anderen Position, wenn sie in einer anderen Orientierung montiert ist.

4. Auslösehilfe (200) nach Anspruch 3, wobei ein optisches Identifikationsmittel an der Auslösehilfe (200) vorgesehen ist, um einem Montagearbeiter die Identität des Fahrzeugs (10, 110) und/oder der Position anzuzeigen, für das bzw. die die Auslösung bestimmt ist, wenn sie in einer gegebenen Orientierung am Fahrzeug (10, 110) montiert ist.

5. Auslöserampe (30, 130) für einen Vorhang-Airbag (20), wobei die Auslöserampe (30, 130) mit einer Auslösehilfe (200) nach einem der vorangehenden Ansprüche ausgestattet ist.

6. Vorhang-Airbag-Rampensystem, umfassend eine Auslösehilfe (200) nach einem der vorangehenden Ansprüche, wobei die Auslösehilfe (200) über die Vorhang-Airbag-Rampe (30, 130) mit der Fahrzeugkarosserie (6, 12) verbunden ist.

7. Fahrzeug (10, 110), umfassend eine Auslösehilfe (200) nach einem der vorangehenden Ansprüche.

8. Verfahren des Montierens einer Auslösehilfe (200) für einen in einem Fahrzeug eingebauten Vorhang-Airbag (20) am Fahrzeug (10, 110), **dadurch gekennzeichnet, dass** das Verfahren Folgendes umfasst:
Anbringen eines Bogens (210) aus biegsamem Material an einer Fahrzeugkarosserie (6, 12) angrenzend an das Fahrzeugdach (14) mittels eines ersten Halters (34a, 34b);
Anbringen der Vorhang-Airbag-Baugruppe (20) an der Fahrzeugkarosserie (6, 12) angrenzend an das Fahrzeugdach (14);
Wickeln des Bogens (210) aus biegsamem Material um mindestens einen Teil des Vorhang-Airbags (22) und;
Befestigen des Bogens (210) aus biegsamem Material um den Vorhang-Airbag (22) an der Fahrzeugkarosserie (6,12) mittels eines zweiten Halters (250).

## Revendications

1. Aide de déploiement (200) d'ensemble de coussin d'air monté sur véhicule (20), l'aide de déploiement (200) comprenant :
une feuille de matériau souple (210) ; et
des premier (34a, 34b) et second (250) moyens de retenue ;
**caractérisé en ce que** :
le premier moyen de retenue (34a ,34b) est configuré pour fixer ladite feuille (210) à une partie du véhicule (10, 110) entre le corps de véhicule (6, 12) et le coussin d'air (20) ; et
**en ce que** le second (250) moyen de retenue est configuré pour fixer de façon détachable ladite feuille (210) au véhicule (10, 110) et libérer ladite feuille (210) durant le déploiement du coussin d'air (20).

2. Aide de déploiement (200) selon la revendication 1, dans lequel l'aide de déploiement (200) comprend en outre un moyen d'identification visuelle pour indiquer à un opérateur de l'ensemble l'identité du véhicule (10, 110) et/ou la position sur laquelle le déploiement souple est prévu.

3. Aide de déploiement (200) selon la revendication 1 ou la revendication 2, dans lequel l'aide de déploiement (200) est conformé de façon à convenir à un seul véhicule (10 ,110) et/ou une seule position quand il est monté sur le véhicule dans une première orientation et à au moins un seul autre véhicule (10, 110) et/ou une seule autre position quand il est monté dans une seconde orientation.

4. Aide de déploiement (200) selon la revendication 3, dans lequel un moyen d'identification visuelle est fourni sur l'aide de déploiement (200) pour indiquer à un opérateur de l'ensemble l'identité du véhicule (10, 110) et/ou la position sur laquelle le déploiement est prévu quand il est monté sur le véhicule (10, 110) dans une orientation donnée.

5. Rampe de déploiement (30 ,130) pour coussin d'air de type rideau (20), dans lequel la rampe de déploiement (30, 130) est dotée d'un aide de déploiement (200) selon l'une quelconque des revendications précédentes.

6. Système de rampe de coussin d'air de type rideau comprenant un aide de déploiement (200) selon l'une quelconque des revendications précédentes, dans lequel l'aide de déploiement (200) est connecté à la carrosserie du véhicule (6, 12) par l'intermédiaire de la rampe de coussin d'air de type rideau (30, 130).

7. Véhicule (10, 110) comprenant un aide de déploiement (200) selon l'une quelconque des revendications précédentes.

8. Procédé de montage d'un aide de déploiement (200) de coussin d'air de type rideau monté sur véhicule (20) sur le véhicule (10, 110), **caractérisé en ce que** le procédé comprend :
la fixation d'une feuille (210) de matériau souple à une carrosserie de voiture (6, 12) adjacente au toit du véhicule (14) par l'intermédiaire d'une première retenue (34a, 34b) ;
la fixation de l'ensemble de coussin d'air de type rideau (20) à la carrosserie de voiture (6, 12) à une position adjacente au toit de véhicule (14) ;
l'enroulement de la feuille (210) de matériau souple autour d'au moins une partie du coussin d'air de type rideau (22) et ;
la fixation de la feuille (210) de matériau souple autour du coussin d'air de type rideau (22) à la carrosserie de véhicule (6, 12) par l'intermédiaire d'une seconde retenue (250).
